# EUROPEAN PATENT SPECIFICATION

(11) **EP 3 890 842 B1**
(45) Date of publication and mention of the grant of the patent: **17.07.2024**
(21) Application number: 19892035.7
(22) Date of filing: 03.12.2019
(51) Int. Cl.: A62B 21/00, A62B 7/14, A62B 25/00, A62B 7/02, A62B 7/08

(54) **LOCKING MANIFOLD FOR CHEMICAL OXYGEN GENERATOR**
VERRIEGELUNGSVERTEILER FÜR EINEN CHEMISCHEN SAUERSTOFFGENERATOR
COLLECTEUR DE VERROUILLAGE POUR GÉNÉRATEUR D'OXYGÈNE CHIMIQUE

(30) Priority: 03.12.2018 US 201862774836 P
(43) Date of publication of application: 13.10.2021
(73) Proprietor: AVOX Systems Inc., Lancaster NY 14086-95802 (US)
(72) Inventor: POPPENBERG, Thomas, Lancaster, NY 14086 (US)
(74) Representative: Gevers & Orès
(86) International application number: PCT/US2019/064331
(87) International publication number: WO 2020/117871

(56) References cited:
- EP-A2- 0 736 486
- WO-A1-2012/160477
- GB-A- 891 392
- US-A- 5 268 021
- US-A- 5 709 252
- US-A- 5 709 252
- US-A1- 2003 131 850
- US-A1- 2003 154 982
- US-A1- 2010 319 796
- US-A1- 2012 031 391
- US-A1- 2015 104 355
- US-A1- 2017 065 447
- US-A1- 2017 342 364
- US-B1- 6 336 667
- US-B2- 9 371 921
- US-B2- 9 481 477

## Description

### Cross-Reference to Related Applications

This application claims priority to U.S. Provisional Application No. 62/774,836, filed on December 3,2018.

### Field of the Disclosure

The present disclosure relates to chemical oxygen generators and, more particularly, to manifolds for chemical oxygen generators.

### Background of the Disclosure

Currently, chemical oxygen generators (COGs) for aircraft may be configured such that a manifold component is able to rotate freely (rotation relative to a housing of the COG). In some aircraft, it is preferable for the COGs to have manifolds that are fixed in position rather than rotatable. However, such fixed manifolds may require the use of two or more COG configurations. For example, some aircraft may require COGs configured for installation in a left side of the aircraft and differently-configured COGs for installation in a right side of the aircraft. The requirement for differently-configured COGs creates complexity in that multiple COG configurations must be manufactured and maintained. EP 0 736 486 A2 discloses a chemical oxygen generator having an oxygen-generating candle and further discloses configuring the generator for thermal decomposition of the oxygen-generating candle.

### Brief Summary of the Disclosure

A first aspect of the present disclosure is a chemical oxygen generator according to claim 1. The manifold includes a locating plate configured to interface with the COG. A plenum body is rotatably attached to the locating plate. The plenum body has an inlet configured to pneumatically couple to an oxygen output of the COG. At least one output port of the plenum body is in pneumatic communication with the inlet. In some embodiments, the plenum body includes two or more output ports in pneumatic communication with the inlet. The manifold includes a lock for immobilizing the plenum body with respect to the locating plate in at least a first position.

The lock may be, for example, a pin. For example, the pin may be a spring-biased pin configured such that the pin is biased to remain in a locked position once locked. The pin may be located in the plenum body and configured to cooperate with the locating plate to immobilize the plenum body with respect to the locating plate. For example, the pin may cooperate with a notch, hole, indentation, or other feature of the locating plate. In other embodiments, the pin may be a part of the locating plate and configured to cooperate with the manifold to immobilize the components. The lock may be configured to irreversibly immobilize the plenum body with respect to the locating plate. In this way, once a COG is configured in a desired arrangement, the COG cannot be reconfigured. In other embodiments, the lock is reversible such that the COG may be reconfigured. The lock may be configured to immobilize the plenum body in at least one additional position relative to the locating plate. In this way, for example, a COG may be configured for installation in a left side of an aircraft or a right side of an aircraft.

### Description of the Drawings

For a fuller understanding of the nature and objects of the disclosure, reference should be made to the following detailed description taken in conjunction with the accompanying drawings, in which:
Figure 1 is a perspective view of a device according to another embodiment of the present disclosure, wherein a pin is located at a front side of a manifold;
Figure 2 is a is a perspective view of a device according to another embodiment of the present disclosure;
Figure 3A is a top view of the device of Figure 2;
Figure 3B is a cross-sectional side view of the device of Figures 2 and 3A, taken along A-A of Figure 3A;
Figure 4 is a side view of the device of Figures 2, 3A, and 3B, wherein a partial cross-section is shown in detail;
Figure 5A is a perspective view of a portion of the device of Figures 2, 3A, 3B, and 4, wherein the plenum body is not shown;
Figure 5B is a top view of the device portion of Figure 5A;
Figure 5C is a top view of the locator plate of Figures 5A and 5B;
Figure 6A is a side view of an exemplary plenum body according to an embodiment of the present disclosure;
Figure 6B is a cross-sectional top view of the plenum body of Figure 6A, taken along B-B of the Figure 6A;
Figure 7A is a side view of another exemplary plenum body according to an embodiment of the present disclosure;
Figure 7B is a cross-sectional top view of the plenum body of Figure 7A, taken along C-C of the Figure 7A; and
Figure 8 is a chemical oxygen generator (COG) according to another embodiment of the present disclosure.

### Detailed Description of the Disclosure

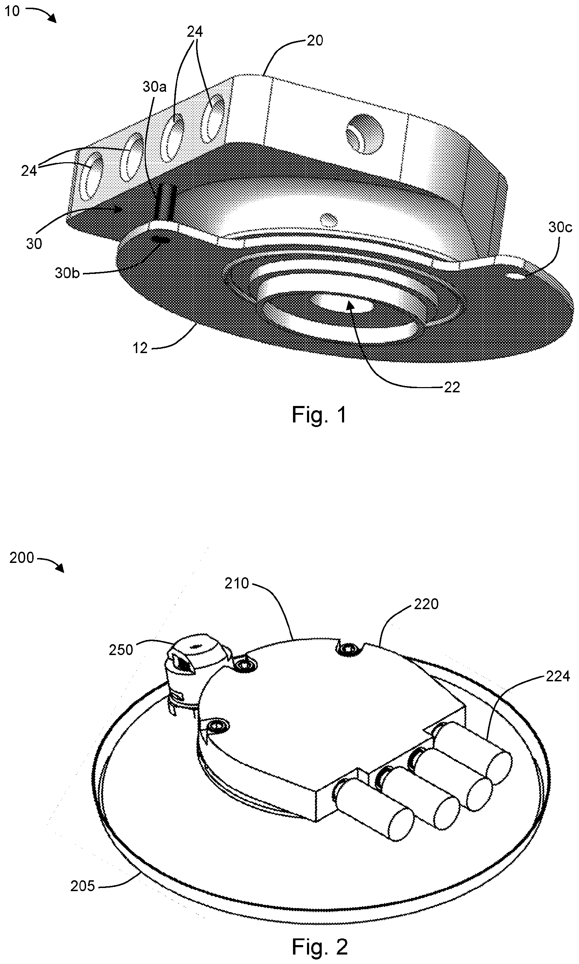

With reference to Figure 1, the present disclosure may be embodied as a manifold **10** mounted to a chemical oxygen generator (COG). The manifold **10** includes a locating plate **12** configured to interface with the COG, for example, with a housing of a COG. A plenum body **20** is rotatably attached to the locating plate **12** (sometimes referred to as a "spud"). The plenum body **20** has an inlet **22** for receiving oxygen from the COG. For example, the inlet may be configured to pneumatically couple to an oxygen output of the COG (*e.g*., COG output mounting stud). At least one output port **24** of the plenum body **20** is in pneumatic communication with the inlet **22.** In some embodiments, the plenum body **20** includes two or more output ports **24** in pneumatic communication with the inlet **22.**

The manifold **10** includes a lock **30** for immobilizing the plenum body **20** with respect to the locating plate **12** in at least a first position. The lock may have an initial (i.e., unlocked) state, and a locked state. While in the unlocked state, the plenum body 20 is rotatable on the locking plate. In the locked state, the plenum body is immobilized with respect to the locking plate. The lock may be configured to automatically move from the unlocked state to the locked state when the plenum body is rotated to a desired position (orientation) on the locking plate. The lock may be, for example, a pin, a latch, a tab, a stud, a clip, etc. In the embodiment depicted in Figure 1, the lock **30** is a pin **30a.** The pin **30a** may be a spring-biased pin configured such that the pin is biased to remain in a locked position once locked (further described below). The pin **30a** may be located in the plenum body **20** and configured to cooperate with the locating plate **12** to immobilize the plenum body **20** with respect to the locating plate **12.** For example, the pin **30a** may cooperate with a receiver of the locating plate. The receiver may be a notch, a hole, an indentation, a slot, or other feature or features of the locating plate. Figure 1 depicts an embodiment having a hole **30b** which cooperates with pin **30a.** In other embodiments, the pin may be a part of the locating plate and configured to cooperate with the manifold to immobilize the components. The lock **30** may be configured to irreversibly immobilize the plenum body **20** with respect to the locating plate **12.** In this way, once a COG (complete COG including the presently-disclosed manifold) is configured in a desired arrangement, the COG cannot be reconfigured. In other embodiments, the lock **30** is reversible such that the COG may be reconfigured. The lock **30** may be configured to immobilize the plenum body **20** in at least one additional position relative to the locating plate (see second hole **30c** in Figure 1). In this way, for example, a COG may be configured for installation in a left side of an aircraft or a right side of an aircraft.

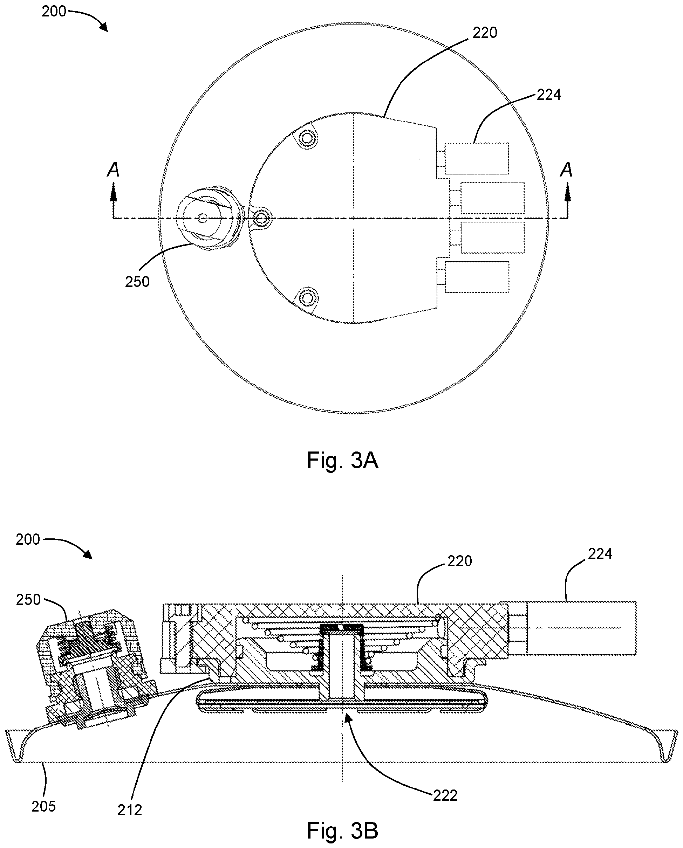

Figures 2, 3A, and 3B show another head assembly **200** for a COG, the head assembly **200** including a manifold **210.** The manifold **210** includes a locating plate **212** configured to interface with the COG. For example, the head assembly **200** may include a cap **205,** which may form a portion of a COG housing, and the locking plate **212** may be attached to the cap **205.** A plenum body **220** is rotatably attached to the locating plate **212.** The plenum body **220** has an inlet **222** configured to receive oxygen from the COG, for example, from an interior portion of a housing of the COG. At least one output port **224** of the plenum body **220** is in pneumatic communication with the inlet **222.** In some embodiments, the plenum body **220** includes two or more output ports **224** in pneumatic communication with the inlet **222.** For example, the embodiment depicted in Figure 2 has four output ports. Some embodiments of a head assembly **200** may also include a pressure relief valve **250.**

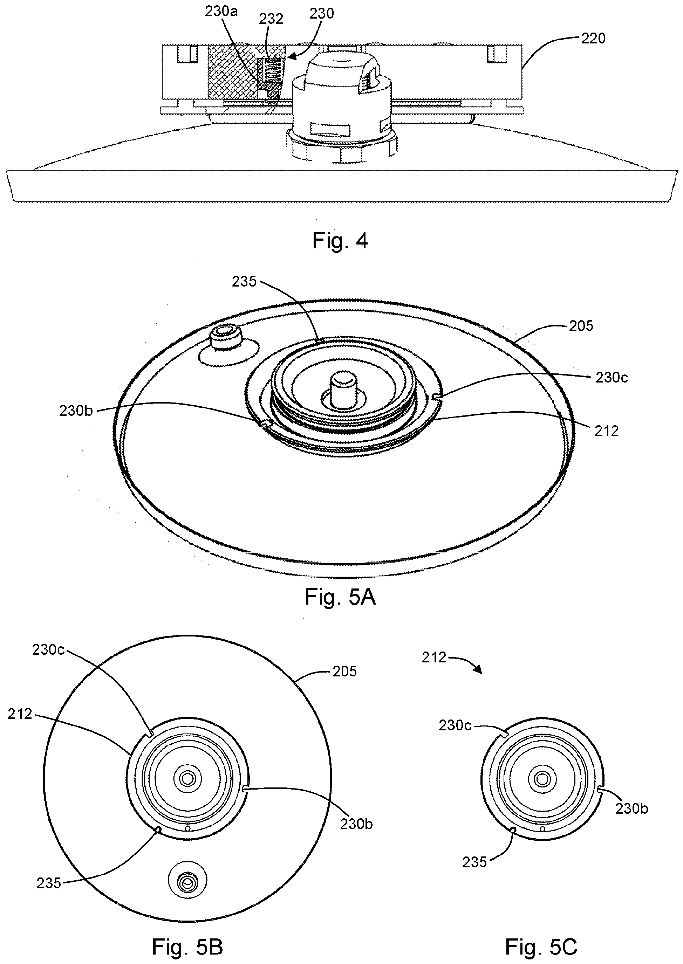

Figure 4 is a detail view showing a lock **230** for immobilizing the plenum body **220** with respect to the locating plate **212** in at least a first position. The lock **230** may be or may include a pin **230a.** The pin **230a** may be located in the plenum body **220** and configured to cooperate with the locating plate **212** to immobilize the plenum body **220** with respect to the locating plate **212.** For example, the pin **230a** may cooperate with a receiver of the locating plate. The receiver may be a notch, hole, indentation, a slot, or other feature or features of the locating plate. Figures 5A-5C depict a locating plate **212** having a notch **230b** which cooperates with pin **230a.** The lock **230** may include a spring **232** such that the pin **230a** is spring-biased to remain in a locked position once locked. The lock **230** may be configured to irreversibly immobilize the plenum body **220** with respect to the locating plate **212.** The lock **230** may be configured to immobilize the plenum body **220** in at least one additional position relative to the locating plate (*see* second notch **230c** in Figures 5A-5C). In this way, for example, a COG may be configured for installation in a left side of an aircraft or a right side of an aircraft. In some embodiments, the lock may be configured to reversibly immobilize the plenum body in a shipping position relative to the locating plate. For example, the locating plate **212** depicted in Figures 5A-5C includes a shipping indent **235** to partially engage the pin **230a.** In this way, the shipping position is intended to hold the manifold in a neutral position during shipment. Upon installation, the manifold can be rotated (for example, rotated by hand) from the shipping position to the final, locked position according to the container configuration.

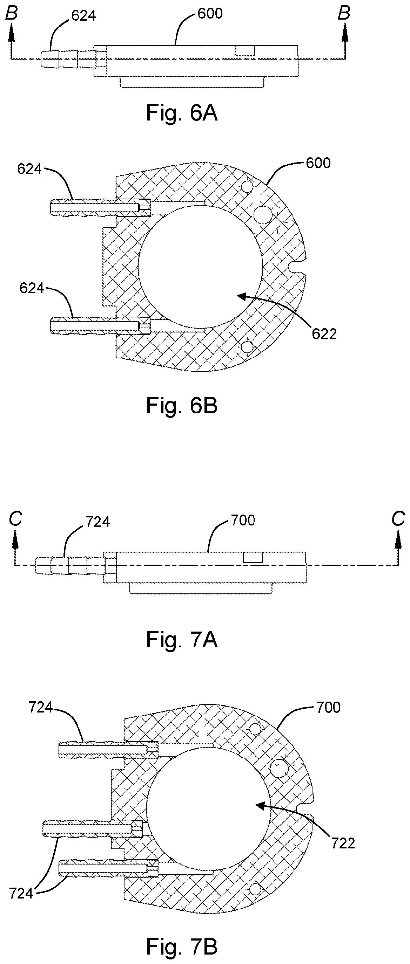

Figures 6A and 6B show an exemplary plenum body **600.** The plenum body **600** includes two output ports **624.** In the present embodiment, the output ports **624** are "barbed" for more secure attachment of hoses/tubes. The plenum body **600** also includes an inlet **622.** Figures 7A and 7B show an exemplary plenum body **700** according to an embodiment of the present disclosure. The plenum body **700** includes three output ports **724.** In the present embodiment, the output ports **724** are "barbed" for more secure attachment of hoses/tubes. The plenum body **700** also includes an inlet **722.**

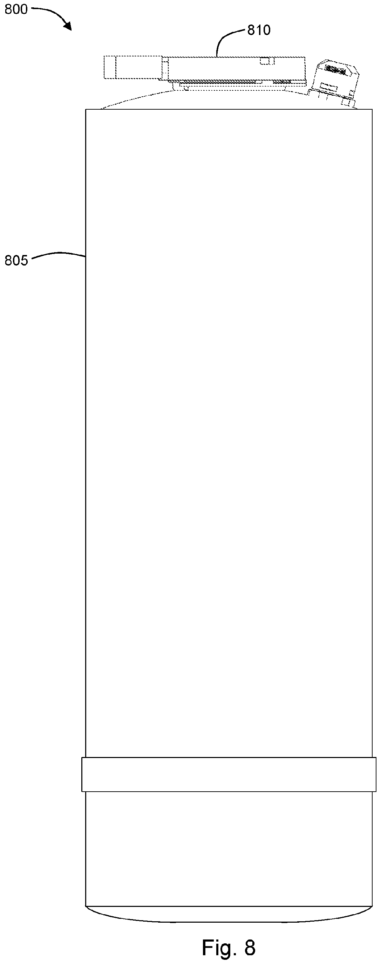

With reference to Figure 8, an embodiment of a chemical oxygen generator (COG) **800** is shown. The COG **800** may comprise a housing **805** and a manifold **810** according to any of the configurations discloses herein. The COG has a housing and a locating plate attached to the housing. A plenum body is rotatably attached to the locating plate. The plenum body has an inlet for receiving oxygen from an interior of the housing. The plenum body also includes at least one output port in pneumatic communication with the inlet. The manifold of the COG includes a lock for immobilizing the plenum body with respect to the locating plate (and with respect to the housing) in at least a first position.

An objective of the present disclosure is to allow locating and locking a manifold in a desired position at the point of installation in an aircraft given a right or left aisle location. By design, in some embodiments, the locking device is not easily tampered with by standard means or typical tooling.

As received by a customer, the chemical oxygen generator manifold may be in a neutral, unlocked position. At the time of installation, the manifold orientation will be selectable by rotating the manifold on a chemical oxygen generator outlet mounting stud. When the manifold is located in the desired position it is locked in place by, for example, the engagement of a spring loaded pin, which mechanically fixes the manifold to the mounting stud. This may secure the location (orientation) of the manifold for the life of the unit.

This addresses and resolves the issue of locking the chemical oxygen generator manifold in a set position in order to accommodate a right or left isle installation in an aircraft. It also allows the manifold to be located and locked into position at the time of installation. This allows shipment of only one part number, instead of multiple part numbers, to cover either a left or right hand installation. Advantages over other designs include flexibility to accommodate right and left isle installation with one part number configuration, no specialty tools are necessary to lock the manifold in place, and adaptable to current low profile manifold design.

When installed, it may be desirable to position and lock the manifold to face the open cabin side of an activated Passenger Service Unit (PSU). In this way, there is a reduced risk of oxygen flowing into a confined space creating a hazardous, oxygen-enriched area. Using embodiments of the present disclosure allows for one manifold to be locked in multiple locations during installation in a smaller envelope compared to past designs and concepts. Previous designs were not user adjustable for manifold location. The manifold either rotated freely or was fixed in one predetermined position. As a result, due to this previous design, multiple configurations were required, and included corresponding part numbers for left and right aircraft installations locations.

Although the present disclosure has been described with respect to one or more particular embodiments, it will be understood that other embodiments of the present disclosure may be made within the scope of the appended claims.

## Claims

1. A chemical oxygen generator, COG, (800) comprising a manifold (10, 210, 810) , the manifold comprising:
a locating plate (12, 212) configured to interface with the COG (800);
a plenum body (20, 220, 600, 700) rotatably attached to the locating plate (12, 212), the plenum body (20, 220, 600, 700) having an inlet (22, 222, 622, 722) for receiving oxygen, the plenum body (20, 220, 600, 700) further having at least one output port (24, 224) in pneumatic communication with the inlet (22, 222, 622, 722); and
a lock (30, 230) for immobilizing the plenum body (20, 220, 600, 700) with respect to the locating plate (12, 212) in at least a first position.

2. The COG (800) of claim 1, wherein the lock (30, 230) comprises a pin (230a, 30a), a latch, a tab, a stud, or a clip.

3. The COG (800) of claim 1, wherein the lock (30, 230) comprises a pin (230a, 30a) located in the plenum body (20, 220, 600, 700) and configured to cooperate with the locating plate (12, 212) to immobilize the plenum body (20, 220, 600, 700) with respect to the locating plate (12, 212).

4. The COG (800) of claim 3, wherein the pin (230a, 30a) is configured to cooperate with a receiver of the locating plate (12, 212), and optionally wherein the receiver is a notch (230b), a hole (30b), a slot, or an indentation.

5. The COG (800) of claim 1, wherein the lock (30, 230) is configured to irreversibly immobilize the plenum body (20, 220, 600, 700) with respect to the locating plate (12, 212) such that the COG (800) cannot be reconfigured.

6. The COG (800) of claim 1, wherein the lock (30, 230) is configured to immobilize the plenum body (20, 220, 600, 700) in at least one additional position relative to the locating plate (12, 212).

7. The COG (800) of claim 1, wherein:
(i) the lock (30, 230) is configured to reversibly immobilize the plenum body (20, 220, 600, 700) in a shipping position relative to the locating plate (12, 212) and such that the COG (800) can be reconfigured;
(ii) the plenum body (20, 220, 600, 700) comprises two or more output ports (24, 224, 624, 724) in pneumatic communication with the inlet (22, 222, 622, 722); and/or
(iii) the locating plate (12, 212) is fixed relative to the COG (800).

8. The COG (800) of claim 1, further comprising:
a housing (805);
wherein the locating plate (12, 212) is attached to the housing (805);
the inlet (22, 222, 622, 722) of the plenum body (20, 220, 600, 700) for receiving oxygen from an interior of the housing (805), .

9. The COG (800) of claim 8, wherein the lock (30, 230) comprises a pin (230a, 30a), a latch, a tab, a stud, or a clip.

10. The COG (800) of claim 8, wherein the lock (30, 230) comprises a pin (230a, 30a) located in the plenum body (20, 220, 600, 700) and configured to cooperate with the locating plate (12, 212) to immobilize the plenum body (20, 220, 600, 700) with respect to the locating plate (12, 212).

11. The COG (800) of claim 10, wherein the pin (230a, 30a) is configured to cooperate with a receiver of the locating plate (12, 212), and optionally wherein the receiver is a notch (230b), a hole (30b), a slot, or an indentation.

12. The COG (800) of claim 8, wherein the lock (30, 230) is configured to irreversibly immobilize the plenum body (20, 220, 600, 700) with respect to the locating plate (12, 212) and such that the chemical oxygen generator (800) cannot be reconfigured.

13. The COG (800) of claim 8, wherein the lock (30, 230) is configured to immobilize the plenum body (20, 220, 600, 700) in at least one additional position relative to the locating plate (12, 212).

14. The COG (800) of claim 8, wherein:
(i) the lock (30, 230) is configured to reversibly immobilize the plenum body (20, 220, 600, 700) in a shipping position relative to the locating plate (12, 212) and such that the chemical oxygen generator (800) can be reconfigured; and/or
(ii) the plenum body (20, 220, 600, 700) comprises two or more output ports (24, 224, 624, 724) in pneumatic communication with the inlet (22, 222, 622, 722).

## Patentansprüche

1. Chemischer Sauerstoffgenerator, COG, (800), umfassend einen Verteiler (10, 210, 810), wobei der Verteiler Folgendes umfasst:
eine Auflageplatte (12, 212), die so konfiguriert ist, dass sie eine Schnittstelle mit dem COG (800) bildet;
ein Kammergehäuse (20, 220, 600, 700), das drehbar an der Auflageplatte (12, 212) angebracht ist, wobei das Kammergehäuse (20, 220, 600, 700) einen Einlass (22, 222, 622, 722) zur Aufnahme von Sauerstoff aufweist, wobei das Kammergehäuse (20, 220, 600, 700) weiter mindestens eine Ausgangsöffnung (24, 224) in pneumatischer Kommunikation mit dem Einlass (22, 222, 622, 722) aufweist; und
eine Verriegelung (30, 230) zum Fixieren des Kammergehäuses (20, 220, 600, 700) in Bezug auf die Auflageplatte (12, 212) in mindestens einer ersten Stellung.

2. COG (800) nach Anspruch 1, wobei das Schloss (30, 230) einen Stift (230a, 30a), einen Riegel, eine Lasche, einen Bolzen oder eine Klammer umfasst.

3. COG (800) nach Anspruch 1, wobei die Verriegelung (30, 230) einen Stift (230a, 30a) umfasst, der sich im Kammergehäuse (20, 220, 600, 700) befindet und so konfiguriert ist, dass er mit der Auflageplatte (12, 212) zusammenwirkt, um das Kammergehäuse (20, 220, 600, 700) in Bezug auf die Auflageplatte (12, 212) zu fixieren.

4. COG (800) nach Anspruch 3, wobei der Stift (230a, 30a) so konfiguriert ist, dass er mit einer Aufnahme der Auflageplatte (12, 212) zusammenwirkt, und wobei die Aufnahme gegebenenfalls eine Kerbe (230b), ein Loch (30b), ein Schlitz oder eine Vertiefung ist.

5. COG (800) nach Anspruch 1, wobei die Verriegelung (30, 230) so konfiguriert ist, dass sie das Kammergehäuse (20, 220, 600, 700) in Bezug auf die Auflageplatte (12, 212) irreversibel fixiert, sodass der COG (800) nicht neu konfiguriert werden kann.

6. COG (800) nach Anspruch 1, wobei die Verriegelung (30, 230) so konfiguriert ist, dass sie das Kammergehäuse (20, 220, 600, 700) in mindestens einer zusätzlichen Stellung relativ zur Auflageplatte (12, 212) fixiert.

7. COG (800) nach Anspruch 1, wobei:
(i) die Verriegelung (30, 230) so konfiguriert ist, dass sie das Kammergehäuse (20, 220, 600, 700) in einer Versandstellung relativ zur Auflageplatte (12, 212) reversibel fixiert, sodass der COG (800) neu konfiguriert werden kann;
(ii) das Kammergehäuse (20, 220, 600, 700) zwei oder mehr Ausgangsöffnungen (24, 224, 624, 724) in pneumatischer Kommunikation mit dem Einlass (22, 222, 622, 722) umfasst; und/oder
(iii) die Auflageplatte (12, 212) relativ zum COG (800) befestigt ist.

8. COG (800) nach Anspruch 1, weiter umfassend:
ein Gehäuse (805);
wobei die Auflageplatte (12, 212) an dem Gehäuse (805) angebracht ist;
den Einlass (22, 222, 622, 722) des Kammergehäuses (20, 220, 600, 700) zur Aufnahme von Sauerstoff aus einem Innenraum des Gehäuses (805).

9. COG (800) nach Anspruch 8, wobei das Schloss (30, 230) einen Stift (230a, 30a), einen Riegel, eine Lasche, einen Bolzen oder eine Klammer umfasst.

10. COG (800) nach Anspruch 8, wobei die Verriegelung (30, 230) einen Stift (230a, 30a) umfasst, der sich im Kammergehäuse (20, 220, 600, 700) befindet und so konfiguriert ist, dass er mit der Auflageplatte (12, 212) zusammenwirkt, um das Kammergehäuse (20, 220, 600, 700) in Bezug auf die Auflageplatte (12, 212) zu fixieren.

11. COG (800) nach Anspruch 10, wobei der Stift (230a, 30a) so konfiguriert ist, dass er mit einer Aufnahme der Auflageplatte (12, 212) zusammenwirkt, und wobei die Aufnahme gegebenenfalls eine Kerbe (230b), ein Loch (30b), ein Schlitz oder eine Vertiefung ist.

12. COG (800) nach Anspruch 8, wobei die Verriegelung (30, 230) so konfiguriert ist, dass sie das Kammergehäuse (20, 220, 600, 700) in Bezug auf die Auflageplatte (12, 212) irreversibel fixiert, sodass der chemische Sauerstoffgenerator (800) nicht neu konfiguriert werden kann.

13. COG (800) nach Anspruch 8, wobei die Verriegelung (30, 230) so konfiguriert ist, dass sie das Kammergehäuse (20, 220, 600, 700) in mindestens einer zusätzlichen Stellung relativ zur Auflageplatte (12, 212) fixiert.

14. COG (800) nach Anspruch 8, wobei:
(i) die Verriegelung (30, 230) so konfiguriert ist, dass sie das Kammergehäuse (20, 220, 600, 700) in einer Versandstellung relativ zur Auflageplatte (12, 212) reversibel fixiert, sodass der chemische Sauerstoffgenerator (800) neu konfiguriert werden kann; und/oder
(ii) das Kammergehäuse (20, 220, 600, 700) zwei oder mehr Ausgangsöffnungen (24, 224, 624, 724) in pneumatischer Kommunikation mit dem Einlass (22, 222, 622, 722) umfasst.

## Revendications

1. Générateur d'oxygène chimique, COG (800) comprenant un collecteur (10, 210, 810), le collecteur comprenant :
une plaque de positionnement (12, 212) configurée pour s'interfacer avec le COG (800) ;
un corps de plénum (20, 220, 600, 700) fixé de manière rotative à la plaque de positionnement (12, 212), le corps de plénum (20, 220, 600, 700) ayant une entrée (22, 222, 622, 722) pour recevoir de l'oxygène, le corps de plénum (20, 220, 600, 700) ayant en outre au moins un orifice de sortie (24, 224) en communication pneumatique avec l'entrée (22, 222, 622, 722) ; et
un verrou (30, 230) pour immobiliser le corps de plénum (20, 220, 600, 700) par rapport à la plaque de positionnement (12, 212) dans au moins une première position.

2. COG (800) de la revendication 1, dans lequel le verrou (30, 230) comprend une goupille (230a, 30a), un loquet, une languette, un goujon ou un clip.

3. COG (800) de la revendication 1, dans lequel le verrou (30, 230) comprend une goupille (230a, 30a) située dans le corps de plénum (20, 220, 600, 700) et configurée pour coopérer avec la plaque de positionnement (12, 212) afin d'immobiliser le corps de plénum (20, 220, 600, 700) par rapport à la plaque de positionnement (12, 212).

4. COG (800) de la revendication 3, dans lequel la goupille (230a, 30a) est configurée pour coopérer avec un récepteur de la plaque de positionnement (12, 212), et éventuellement dans lequel le récepteur est une encoche (230b), un trou (30b), une fente ou une indentation.

5. COG (800) de la revendication 1, dans lequel le verrou (30, 230) est configuré pour immobiliser de manière irréversible le corps de plénum (20, 220, 600, 700) par rapport à la plaque de positionnement (12, 212) de manière à ce que le COG (800) ne puisse pas être reconfiguré.

6. COG (800) de la revendication 1, dans lequel le verrou (30, 230) est configuré pour immobiliser le corps de plénum (20, 220, 600, 700) dans au moins une position supplémentaire par rapport à la plaque de positionnement (12, 212).

7. COG (800) de la revendication 1, dans lequel :
(i) le verrou (30, 230) est configuré pour immobiliser de manière réversible le corps de plénum (20, 220, 600, 700) dans une position d'expédition par rapport à la plaque de positionnement (12, 212) et de manière à ce que le COG (800) puisse être reconfiguré ;
(ii) le corps de plénum (20, 220, 600, 700) comprend deux ou plusieurs orifices de sortie (24, 224, 624, 724) en communication pneumatique avec l'entrée (22, 222, 622, 722) ; et/ou
(iii) la plaque de positionnement (12, 212) est fixée par rapport au COG (800).

8. COG (800) de la revendication 1, comprenant en outre :
un boîtier (805) ;
dans lequel la plaque de positionnement (12, 212) est fixée au boîtier (805) ;
l'entrée (22, 222, 622, 722) du corps de plénum (20, 220, 600, 700) pour recevoir l'oxygène de l'intérieur du boîtier (805).

9. COG (800) de la revendication 8, dans lequel le verrou (30, 230) comprend une goupille (230a, 30a), un loquet, une languette, un goujon ou un clip.

10. COG (800) de la revendication 8, dans lequel le verrou (30, 230) comprend une goupille (230a, 30a) située dans le corps de plénum (20, 220, 600, 700) et configurée pour coopérer avec la plaque de positionnement (12, 212) afin d'immobiliser le corps de plénum (20, 220, 600, 700) par rapport à la plaque de positionnement (12, 212).

11. COG (800) de la revendication 10, dans lequel la goupille (230a, 30a) est configurée pour coopérer avec un récepteur de la plaque de positionnement (12, 212), et éventuellement dans lequel le récepteur est une encoche (230b), un trou (30b), une fente, ou une indentation.

12. COG (800) de la revendication 8, dans lequel le verrou (30, 230) est configuré pour immobiliser de manière irréversible le corps de plénum (20, 220, 600, 700) par rapport à la plaque de positionnement (12, 212) et de manière à ce que le générateur d'oxygène chimique (800) ne puisse pas être reconfiguré.

13. COG (800) de la revendication 8, dans lequel le verrou (30, 230) est configuré pour immobiliser le corps de plénum (20, 220, 600, 700) dans au moins une position supplémentaire par rapport à la plaque de positionnement (12, 212).

14. COG (800) de la revendication 8, dans lequel :
(i) le verrou (30, 230) est configuré pour immobiliser de manière réversible le corps de plénum (20, 220, 600, 700) dans une position d'expédition par rapport à la plaque de positionnement (12, 212) et de manière à ce que le générateur d'oxygène chimique (800) puisse être reconfiguré ; et/ou
(ii) le corps de plénum (20, 220, 600, 700) comprend deux ou plusieurs orifices de sortie (24, 224, 624, 724) en communication pneumatique avec l'entrée (22, 222, 622, 722).
